# EUROPEAN PATENT SPECIFICATION

(11) **EP 1 930 976 B1**
(45) Date of publication and mention of the grant of the patent: **11.05.2011**
(21) Application number: 07121363.1
(22) Date of filing: 22.11.2007
(51) Int. Cl.: H01M 8/24, H01M 8/02, H01M 8/04, H01M 8/00

(54) **Consumer battery comprising a fuel cell**
Verbraucherbatterie mit Brennstoffzelle
Batterie de consommateur comportant une pile à combustible

(30) Priority: 23.11.2006 ES 200603031
(43) Date of publication of application: 11.06.2008
(73) Proprietor: Celaya, Emparanza y Galdos Internacional, S.A., 01013 Vitoria Alava (ES)
(72) Inventor: Alday Lesaga, Francisco Javier, 01013 Vitoria (Àlaba) (ES); Cantero Uribe-Echebarría, Igor, 01013 Vitoria (Àlaba) (ES)
(74) Representative: ZBM Patents

(56) References cited:
- EP-A- 1 603 179
- WO-A-90/14694
- JP-A- 2 312 164
- US-A- 5 759 712
- US-A1- 2004 096 718
- US-B1- 6 506 511

## Description

The present invention is related to a method of manufacturing a consumer battery, said battery comprising an electricity generating unit and a fuel carrying unit, both of which form a tubular fuel cell, the electricity generating unit being provided with an outer tubular current collector, so that the fuel carrying unit supplies a gaseous fuel to the electricity generating unit, the oxidizer being the oxygen in the air.

### BACKGROUND ART

The so called "consumer batteries" are unitary electrochemical devices that supply a direct current at 1.5 V in open circuit (with a single cell battery; with a multiple cell battery the voltage will be a multiple of 1.5 V). These batteries are marketed with different standardized formats; the most typical consumer battery is the LRAA or AA type, having a cylindrical shape 50.5 mm high and 14.2 mm wide.

The present market for consumer batteries is dominated by the Zn-MnO₂ chemistry (preferably in the alkaline form), but the fast evolution of electronics has often caused the energy demand of portable apparatuses to be unmet by the traditional alkaline batteries. This limitation is contributing to the development of alternative technologies that, while keeping the size and voltage of consumer batteries, offer advantages over traditional batteries.

One of said alternative technologies is the fuel cell technology. Fuel cells use the transfer of protons and electrons that take place in the electrochemical reaction of water formation (4H⁺ + O₂ + 4e → 2H₂O) for generating electricity. Hydrogen (under different forms) is normally used as fuel and oxygen (from the air) is normally used as oxidizer. The only waste product is water.

A fuel cell generally consists of a stack of elemental cells, each of which comprises an electrolyte and two electrodes, anode and cathode. The electrolyte divides the anodic compartment, where the fuel oxidation takes place (which normally involves the decomposition of hydrogen in protons and electrons, helped by a catalyst), from the cathodic compartment, where the reduction of the oxidizer takes place (resulting in water formation when the oxidizer is oxygen). For these reactions, and electricity, to be produced it is necessary that the electrolyte may be permeable to protons but not to electrons. In this way the protons can pass through the electrolyte and the electrons can circulate through an external circuit arranged between cathode and anode, generating en electric current. In the anode, protons, electrons and oxygen combine to produce water.

Electrochemical reactions in a fuel cell often take place under high pressure and temperature conditions, in order to improve their efficiency. In a consumer battery these conditions can obviously not be met, hence the battery must be designed to be operational under normal pressure and temperature conditions, without forced supply of gases and without external temperature management, in a way called "passive".

An electrolyte configuration that may be suitable for fuel cells is the proton exchange membrane (PEM). In one such cell the electrolyte is a polymeric membrane coated with a catalyst layer that induces the electrochemical reactions and transfers the generated ions. Said membrane and the electrodes constitute a MEA (Membrane Electrode Assembly). Usually, the electrodes also work as gas diffusers, that is, they enhance hydrogen and oxygen diffusion on the catalyst layer of the membrane.

The theoretical potential of the described electrochemical reaction is 1.23 V, but the inner resistances and other factors limit this value to around 0.7 V. Consequently, in a consumer battery two cells or MEAs must be arranged in series. In the known fuel cells said cells use to be flat and use to be stacked connected in series. But flat, for example circular, cells having the cross-section size of a consumer battery have a surface too small to deliver the required power, so it becomes necessary to study other geometric configurations. A cylindrical arrangement seems adequate to the shape of a consumer battery.

Fuel cells with cylindrical cells are well known; in these cells the different parts have a cylindrical or tubular shape. The applicant himself, in his patent application EP1603179 discloses a consumer battery comprising two independent and detachable units: an electricity generating unit (EGU) and a fuel carrying unit (FCU), which together form a passive tubular fuel cell (in which the gases are not pressurized, humidified or heated). The EGU has an outer tubular current collector and two concentric tubular MEAs, so that the FCU supplies gaseous hydrogen to the MEAs, the oxidizer being the oxygen in the air.

Although that document discloses a fuel cell feasible as consumer battery, it doesn't satisfactorily overcome the difficulties involved in delivering electric energy with enough power and storage.

US6506511 discloses a multi-element fuel cell system comprising a substantially cylindrical former, a rechargeable hydrogen fuel cell source and a plurality of fuel cell elements. Each fuel cell element is positioned radially outwardly of the former and is provided, in an outward direction, with an anode current collector, a membrane electrode assembly and a cathode current collector. The cathode current collector applies even compression to the fuel cell element, such that good electrical contact is maintained within each fuel cell element.

### SUMMARY OF THE INVENTION

It is an object of the present invention to provide a consumer battery with fuel cell technology that is practical and economical.

To achieve this object, the method of the invention comprises the steps of: providing the electricity generating unit with an inner tubular current collector; arranging the parts of the electricity generating unit between the outer tubular current collector and the inner tubular current collector; expanding the inner tubular current collector, so that it applies an outward pressure on said parts arranged between both collectors. Thus, a good electrical and chemical contact is provided between the parts of the fuel cell, as well as an excellent sealing preventing hydrogen leakage.

Advantageously, the method comprises providing the electricity generating unit with two adjacent electricity generating tubular cells connected in series. In this way the consumer battery offers a voltage of approximately 1.5 V.

Preferably, each tubular cell comprises at least one proton exchange membrane provided, on each side, with a catalyst and a gas diffuser.

In an embodiment, at least one of said proton exchange membranes is bent to adopt a cylindrical configuration starting from a flat shape, and the ends of at least one tubular cell provided with a flat membrane bent into a cylinder are joined and sealed to prevent gas leakage.

In an embodiment, at least one of the proton exchange membranes are made with a tubular shape.

Advantageously, each tubular cell comprises at least two cylindrical seals for sealing the cell and preventing gas leakage, said seals being arranged on the outer side and on the inner side of the cell.

In an embodiment, the cylindrical seals are formed during the manufacture of the cell starting from a fluid material that solidifies sealing the cell and preventing gases from entering or exiting the cell.

In an embodiment, the cylindrical seals are formed during the manufacture of the cell by winding a sheet of a deformable material.

In an embodiment, the cylindrical seals are pre-formed deformable pieces that provide the sealing of the cells after being pressured.

The deformation of the cylindrical seals may be plastic or elastic.

In an embodiment, two adjacent tubular cells are axially arranged, that is, are consecutive. An intermediate current collector is arranged between the inner current collector and the outer current collector, said intermediate collector being shaped as a tubular mesh with two diameters that define two demi-tubes, so that a cell is placed inside the demi-tube having the larger diameter and the adjacent cell is placed surrounding the outside of the demi-tube having the smaller diameter. The mesh structure allows for a correct electric contact and helps the gases to pass through it.

In an embodiment, two adjacent tubular cells are radially arranged, that is, are concentrical. Said two concentrical tubular cells may be inverse, that is, may have their elements arranged in inverse order in the radial direction. Or they may be direct, that is, may have their elements arranged in the same order in the radial direction. In the last case, the electric contact may be established by a bipolar ring arranged between the two concentrical tubular cells.

In an embodiment, said bipolar ring is shaped as a spiral corrugated tube, which also defines some channels for the circulation of oxygen between the two concentrical tubular cells.

Preferably, the electricity generating unit is the positive contact of the battery and the fuel carrying unit is the negative contact, though the configuration may be the opposite, that is, the electricity generating unit may be the negative contact of the battery and the fuel carrying unit may be the positive contact.

In an embodiment, the electricity generating unit and the fuel carrying unit are independent and detachable units. The fuel carrying unit may be disposable after being exhausted.

In an embodiment, the electricity generating unit and the fuel carrying unit are integral and not-detachable units.

Advantageously, the fuel carrying unit is rechargeable.

In an embodiment, the fuel carrying unit is configured in such a way that, in operation, i.e., when placing a battery in its work housing, the fuel carrying unit can be pushed by a spring towards the inside of the electricity generating unit, this action causing an exit valve for the gaseous fuel to be opened to the electricity generating unit.

Preferably, the gaseous fuel is hydrogen.

In an embodiment, the fuel carrying unit stores the hydrogen combined in metallic hydrides.

In an embodiment, the fuel carrying unit stores the hydrogen in carbon nanofibers.

In an embodiment, the fuel carrying unit stores the hydrogen in a chemical form, in a compound containing it.

In an embodiment, the fuel carrying unit occupies a significant portion of the volume contained in the inner collector of the electricity generating unit, preferably more than two thirds. In this way the available space is better used and the battery may last longer.

### BRIEF DESCRIPTION OF THE DRAWINGS

Some particular embodiments of the present invention will be described in the following, only by way of non-limiting example, with reference to the appended drawings, in which:
figure 1 is a view of an embodiment that separately shows the electricity generating unit (EGU) and the fuel carrying unit (FCU);
figure 2 schematically shows a battery having two consecutive cells;
figure 3 shows a battery having two concentrical cells directly arranged;
figure 4 shows a battery having two concentrical cells inversely arranged;
figure 5 is a view of two alternatives of the outer collector;
figure 6 shows a cell between the inner collector and the outer collector;
figure 7 shows some seals for a flat MEA;
figure 8 shows some seals for a tubular MEA;
figure 9 shows a continuous strip of seals;
figure 10 shows the connector between two consecutive MEAs;
figure 11 shows an intermediate collector between two consecutive MEAs; and figure 12 shows a connector between two direct concentrical MEAs.

### DESCRIPTION OF PARTICULAR EMBODIMENTS

Some embodiments of a battery that has a size and a performance compatible with consumer batteries (specifically with the battery LR6 or AA) and that uses fuel cell technology will now be described. Passive fuel cells having a polymeric membrane are preferably employed; to be "passive" means that the fuel cell lacks forced gas supply and external temperature management; the fuel is preferably hydrogen. A fuel cell having a polymeric membrane comprises at least one MEA (Membrane Electrode Assembly), which is a single electricity generating cell.

Generally speaking, the fuel cell is divided in an electricity generating unit (EGU) and a fuel carrying unit (FCU).

The components of an embodiment are grouped in two parts: a reusable part that includes the EGU and a disposable part that contains the FCU.

The FCU of another embodiment comprises permanent fuel cartridges. In this case the cartridges are preferably rechargeable, although the disposable cartridges can also be rechargeable.

In order to offer the required voltage (1.5 V), the EGU has at least two cells or MEAs connected in series. Each MEA is formed by a membrane able to transport H⁺ ions through itself, said membrane having a catalyst layer on each side. Said catalyst facilitates the electrochemical reactions in which, on one hand, the hydrogen is decomposed and, on the other hand, the oxygen is also decomposed. This three layer assembly is named a 3 layer MEA. The fuel (H₂) and the oxidizer (O₂) reach the catalyst in gaseous form, and hence it is expedient to arrange other two layers (one on each side of the MEA) to facilitate the approaching and to allow the circulation of electrons. These layers are named diffusing layers and, together with the other three layers, form a 5 layer MEA. Except when otherwise stated, all the MEAs mentioned in the following will refer to this 5 layer assembly.

In the present invention the possibility of stacking flat MEAs perpendicularly to the axial axis is discarded, since the surface of each MEA would be too small and many MEAs should be used, which would complicate the electrical connections and the gas distribution. Besides, the final available volume for storing hydrogen would be too small. In line with the disclosure of ES200401358, by the applicant himself, the MEAs of the present invention are tubular.

In order to make it easier to change the FCU in case it is disposable, or to facilitate its recharge in case it is rechargeable, the FCU is placed in a battery contact region and the EGU is placed in the other contact region. Indeed, one of the battery contacts is on the EGU and the other contact is on the FCU. Consequently, an excellent electrical connection between the EGU and the FCU has to be provided. Besides, the closure or sealing between both units has to be effective to prevent gas leakage.

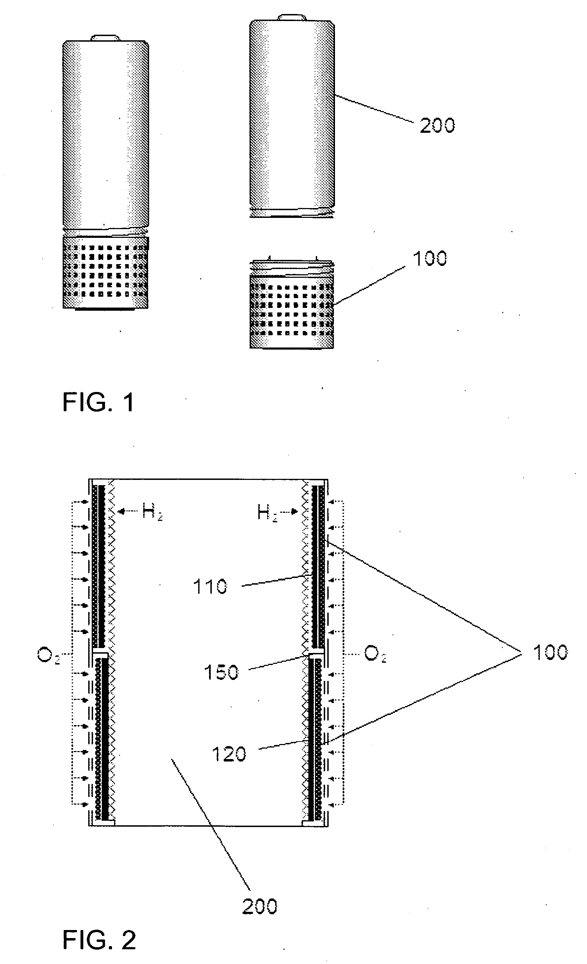

Figure 1 shows a fuel cell with a FCU 200 disposable. The use of a disposable FCU requires a simple and hermetic connection between the EGU 100 and the FCU, because the FCU must be changed once exhausted. Patent application ES200401358 discloses systems to this effect, as well as other features of 2 tubular MEAs connected in series.

On the contrary, the use of a rechargeable FCU allows for the EGU and the FCU to be a single rechargeable element. The connection between both components is simplified and the FCU design can be more complex. In this case care must be taken of recharging the cartridge, which requires for the latter to have a refill valve.

In the battery of figure 1, the FCU 200 contains the positive contact and its end has the typical central protrusion making the positive contact of consumer batteries, the function of which is to prevent inverse contact between two batteries placed consecutively. The lower closure of the EGU 100 includes the negative contact of the battery.

In case the battery has the positive contact on the EGU and the negative contact on the FCU, the protrusion is on the EGU and it is not necessary for it to have a specific piece providing hermetic closure. The FCU design is simpler since it can end with a flat surface.

The simpler arrangement for two tubular MEAs is that which places them forming two consecutive cylinders at the outer region of the tube (see figure 2), so that one side of each MEA 110 and 120 may have access to outside air. In this way the available surface is better used and the connections between the cells are simpler; a connector 150 provides a connection between the two MEAs. The gas regions are also clearly apart, the outside region being for oxygen and the inside region being for hydrogen.

With this configuration the EGU 100 encompasses the whole (or almost the whole) height of the battery, and the FCU 200 is arranged inside the EGU.

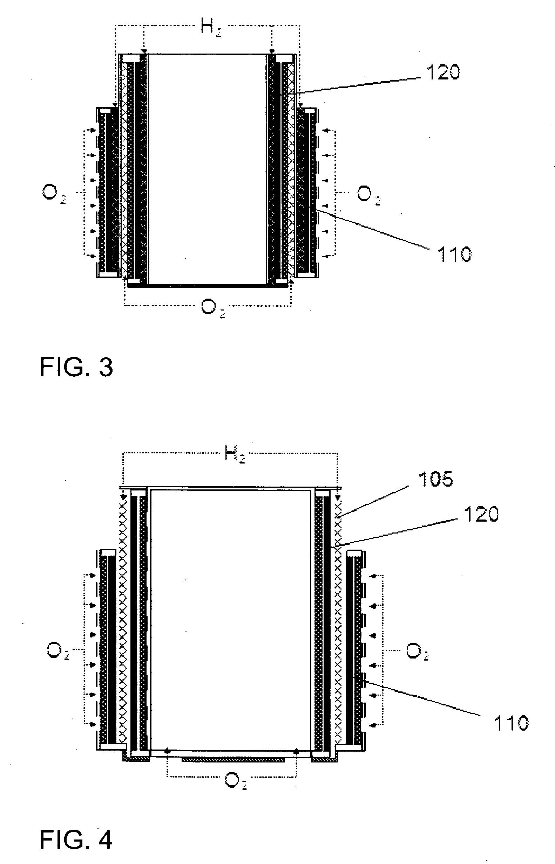

Another configuration is based on arranging the two cells forming a double concentrical ring (figure 3). With this arrangement the inner MEA 120 is somewhat higher than the outer MEA 110, because its diameter is smaller and the two cells must have the same area (although by increasing the catalyst content in the inner cell the efficiency thereof is increased and a smaller area suffices; so it is also possible to have an EGU having two cells of the same height).

With this configuration the EGU does not encompass the height of the battery, and the FGU is placed following the EGU in the axial direction, there being not excluded that the FGU may enter the inner cavity of the EGU.

In a variant of the concentrical arrangement, the outer MEA 110 is placed as in the previous case, but the inner MEA 120 has the electrodes inverted (figure 4). In this way the negative electrodes of the two MEAs share the same hydrogen diffuser 105 and the oxygen entries are in the outer region of the EGU and in the inner cavity thereof.

In this case the electric connection between the two MEAs is more complex than in the previous case, because the two negative electrodes, that are near each other, must be insulated from each other, but at the same time the negative electrode of the outer MEA must contact the positive electrode of the inner MEA. Besides, it is necessary to provide an air entry to the inner cavity of the EGU and it is not possible to use the whole cavity to store hydrogen, so that the space available for the FCU is just the space above the EGU, plus perhaps the central region of the cavity.

In general, a MEA comprises several components (membrane, catalyst, gas diffusers, etc). These components may be:
- Membranes: fluorocarbonated polymers with sulfonic groups (DuPont's Nafion, Gore's Primea, Solvey's Hyfion, DFCC's Sterion, etc.) or alternative polymers like polybencimidazol (PBI), etc.
- Catalysts: usually platinum, but also compounds of cobalt, ruthenium, etc.
- Gas diffusers: normally made from carbon, like carbon cloth or carbon paper.

In order to determine the size of each MEA tests have been performed with a fuel cell having a standard polymeric membrane (membrane of Nafion, electrodes of carbon cloth with a basic layer made from a mixture of carbon powder and Teflon, platinum catalyst deposed on carbon, golden steel collectors, mechanical sealing by bolts). This fuel cell used unpressurized hydrogen from a pressurized container (in practice it offered an uninterrupted supply of hydrogen at atmospheric pressure) and convection air (not pressurized). Temperature and humidity were the environment's.

By comparing this fuel cell and an alkaline battery LR6 it has been found that two 4 cm² MEAs connected in series are needed to have a battery with a performance (intensity and voltage) similar to that of a traditional consumer battery.

Said MEAs can be manufactured by bending a flat sheet or they can comprise a tubular membrane. In the latter case the catalyst layer could be applied on the membrane by printing, using applying rollers, or by spraying, adding the catalyst layer by means of an applying pistol from one of the tube ends.

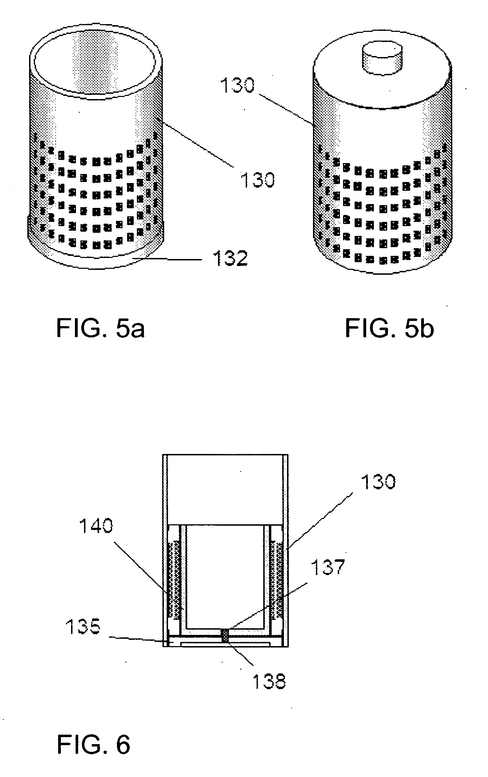

The battery is also provided with an outer collector 130 (see figure 5) the function of which is triple: to transport the electrons from the cathode, to allow the passage of oxygen and to support the whole EGU structure. In order to do so, the outer collector must be formed with a material which is both conductive and resistant. A material that satisfactorily complies with these requirements is steel, as long as it is protected against corrosion.

The outer collector of the EGU is a metallic framework similar to that used with alkaline batteries, but on which the oxygen entries has been holed. In case the permanent part of the battery is located in its lower portion, the outer collector is open at both ends (figure 5a), but when the permanent part is located in the upper portion, the outer collector is closed at one end (figure 5b).

In the first case, the outer collector has a wider region 132 at its lowest portion, in order to adapt the battery closure (similar to that of an alkaline battery) and close the EGU at that end (the other end is closed by the FCU). In the second case, the closed upper portion of the EGU presents the mentioned protrusion typical of the positive contact in alkaline batteries, and the open lower portion is closed by the FCU.

The UGC also comprises an inner collector 140 (figure 6) the function of which is triple too: to transport the electrons from the anode, to allow the passage of hydrogen and to provide the pressure for closing the EGU. As explained below, during the manufacture of the battery the inner collector 140 is outwardly expanded, and ends up pressing the intermediate parts (MEAs, seals and connecting collectors) against the outer collector 130.

The inner collector design may vary depending on the battery configuration. If the EGU is located in the upper portion of the battery, the inner collector is formed like a tube with holed walls. If, instead, the EGU is located in the lower portion of the battery (which is the case showed in figure 6), it is necessary to connect the inner collector 140 to a closure element 135 of the battery. This element transmits the electrons to the negative contact through a metallic nail 138. To prevent internal resistances, the optimal contact between the inner collector 140 (negative collector) and said nail 138 may be effected by means of a weld 137.

Another factor that affects the inner collector design is the EGU configuration: if the MEAs are placed consecutively the inner collector is longer; if the MEAs are concentric the inner collector is narrower.

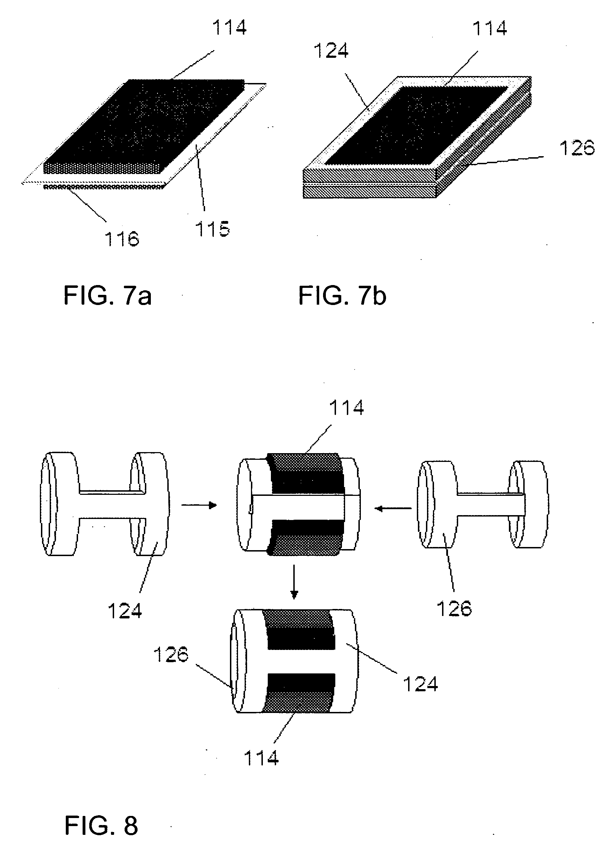

To seal the MEAs and prevent gas leakage, hermetic seals are used. Said seals are made as having the same shape and size as the membrane, by cutting away from their central portion the part corresponding to the gas diffuser; figure 7a shows a flat MEA provided with a membrane 115 and two catalysts/diffusers 114 and 116, and figure 7b shows said MEA but enclosed by an upper seal 124 and a lower seal 126. The seal's height must be the same than the MEA's, so as to prevent lateral gas leakage; if the seal is higher the electric contact of the gas diffuser with the corresponding collector can be impaired.

The materials used in the seals admit being deformed, since they must be deformable to adapt to any imperfection between the collectors and to effectively prevent gas leakage. The most usual materials are Teflon, silicone, polyethylene, polypropylene, etc.

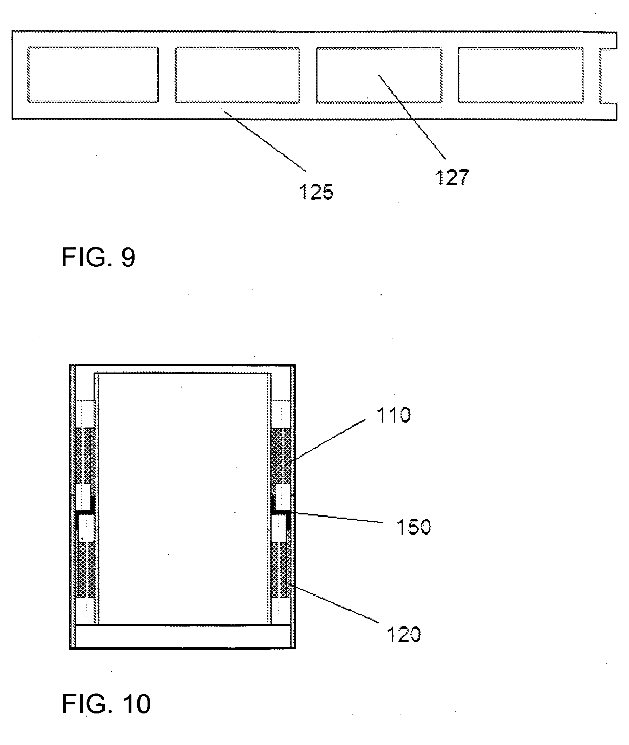

In the cylindrical configuration the seals must seal the MEAs in such a way that gases do not leak along the tube. There are several possibilities for complying with this requirement, among them:
- Plastic washers: by placing a washer in the upper portion of the tube and another one in the lower portion of the tube, a good sealing of the cell can be achieved. The washer design is such that it holds the membrane and seals it against the tube wall. These washers are cheap and easy to handle.
- O-rings: the concept is similar to the previous one, since the aim is to hold the MEA against the tube. It presents the advantage that it is a very well known system for sealing tubes.
- Cylindrical seal: the flat seals are adapted to a cylindrical configuration. Two seals 124 and 126 (figure 8) are used, one above the MEA 114 and the other below it, respectively. Each seal forms a frame, as happens with the flat MEAs of figure 7. The proposed design makes one side of the frame redundant, so that it can be eliminated thus avoiding one possible leaking point.
- Plastic strip: the cylindrical seal described in the previous paragraph may be hand-made by using a plastic strip with a suitable design: the width of the strip 125 (figure 9) should be equal to the width of the seal (equal to the width of the membrane of the MEA), and there should be openings 127 in the strip, said openings having the size and shape of the gas diffuser. Depending on the thickness of the strip, it may be wound around a cylindrical support (for example the inner collector) as many times as necessary until the resulting piece has the same diameter than the inner cylindrical seal 126 (figure 8). Then the MEA is put in place, wound in such a way that the inner gas diffuser may fit in the opening formed by the seal. Afterwards the strip is wound further, above the membrane, to form the outer cylindrical seal 124 (figure 8), leaving the outer gas diffuser in the opening left by every strip wind. The final result is similar to that shown in figure 8, but its manufacture is much easier to automatize.

As has already being pointed out, a single MEA cannot provide the voltage needed to be compatible with a consumer battery, so it is necessary to connect more than one MEA in series. This connection is different depending on the EGU configuration.

In the case of two consecutive MEAs, the electrical connection between them may be provided by a connector 150 (figure 10) in the form of a metallic mesh (allowing the gases to pass through it) that is arranged so that it may link the outer electrode or one MEA with the inner electrode of the other MEA. It is not necessary for the mesh to form a complete tube, and this facilitates the arrangement of the mesh. If, as happens in figure 10, the EGU is placed in the lower portion of the battery, the connector links the outer electrode of the lower MEA 120 with the inner electrode of the upper MEA 110. If the EGU is placed in the upper portion, the connections are the opposite.

It is necessary to avoid any electric contact between the connector 150 and the adjacent collector (otherwise there would be a short-circuit in the battery); towards this end the corresponding seal can be made longer (and be provided with a mesh structure allowing the gases to pass through it) or the affected region on the corresponding collector can be insulated, for example with a paint layer.

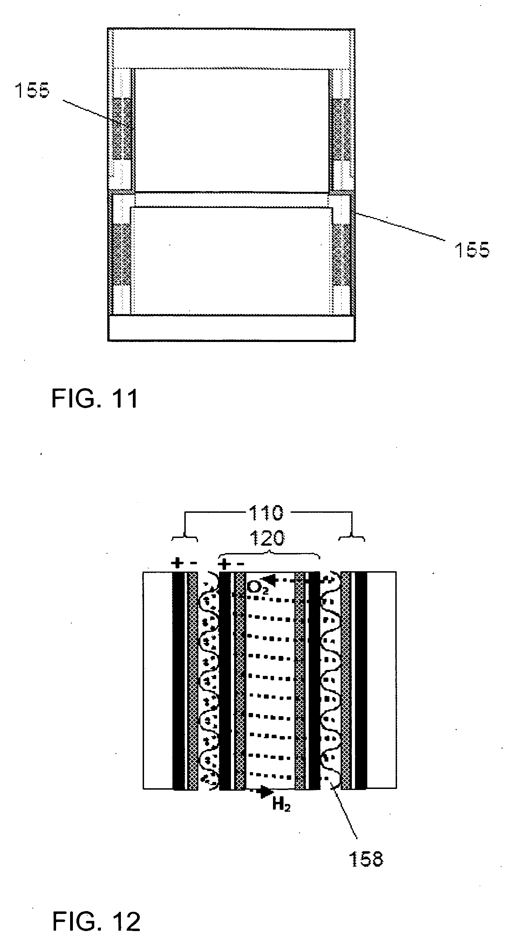

In another alternative configuration (figure 11) an intermediate collector 155 is used, formed as a tubular mesh having two diameters that define two demi-tubes, so that one cell is located inside the wider demi-tube and the adjacent cell surrounds the outside of the narrower demi-tube.

In the case of two direct concentrical MEAs, the connector between them is a piece equivalent to the bipolar plate of a traditional battery, but having a cylindrical shape (bipolar ring). Said connector is made of a conductor material, because it is a function of its to transmit the electrons between the two MEAs. Moreover, it must serve to channel the gases between the two MEAs, thus having two regions for gas diffusion independent of each other (the inner one for hydrogen and the outer one for oxygen). A suitable format is a spiral tub 158 made of corrugated steel (figure 12). Said tube, when it is inwardly and outwardly limited by two smooth tubes (that in the fuel cell are the electrodes), forms two continuous channels independent from each other between the outer MEA 110 and the inner MEA 120. When hydrogen is introduced through the outer conduit and oxygen is introduced through the inner conduit, a system for distributing gases similar to that provided by a flat bipolar plate is obtained.

In place of said bipolar ring a tube grooved on the outside can be used, in order to allow a certain spacing with respect to the electrode for facilitating the hydrogen access while keeping the electric contact with said electrode. Alternatively, a ring made of metallic foam and closed at its inner portion can be used.

In place of the corrugated steel, a tube threaded both on the inside and on the outside can be used (although in this case the thickness of the ring is bigger); alternatively, a ring made of metallic foam having a solid central portion can be used.

In the case of two concentrical inverse MEAs, the connector between them is a more complex component than the previously described. Herewith, the electric connection is made between the inner electrodes of the two MEAs, and the electric contact between contiguous electrodes should be avoided; by applying some drops of resin between said contiguous electrodes a safety distance between them can be kept.

In the consecutive MEAs configuration oxygen is around the battery, thus being enough for the positive outer collector to have holes, as explained before. In a simple configuration, the cavity in the centre of the EGU acts as a hydrogen reservoir, so that the access of hydrogen to the electrodes is as easy as with oxygen (as mentioned, the inner collector is holed too).

In a preferred variant, in which a FCU whose shape fits the inner cavity of the EGU in order to make the best use of the available volume, hydrogen has to be channelled from the exit point of the gas to the electrodes. The simplest channel is obtained by maintaining the minimum constant distance between the FCU and the inner collector.

The opening of the FCU is produced, for example, by means of a pressure valve located at the end that is inserted into the EGU, and the latter is provided with an element for activating said opening; the size of said element is adjusted so that it may push the valve when the FCU is completely closed.

When the FCU is disposable, said element might break the sealing of the FCU instead of simply opening it.

In any case, it is convenient for the hydrogen exit to be closed until the time arrives for placing the battery in its work housing. This will prevent hydrogen leakage due to permeation through the membrane when the battery is not in use. The force of the spring in said housing can be employed to this effect, by making it to open the valve. This mechanism can be based on a protrusion that may slightly displace towards the inside of de battery when it is pushed, or in the fact that said spring may push the FCU towards the inner portion of the EGU, thus opening the FCU exit valve for hydrogen.

The connection between the EGU and the FCU has two functions: it prevents fuel leakage and establishes the electric connection between both parts (each of which includes a contact of the battery).

Said connection depends on whether the EGU is located in the lower portion or in the upper portion of the battery.

In the first case (EGU in the lower portion of the battery) the positive contact is on the FCU and the negative contact is on the EGU. The electric connection between both units must be made at the outer region, by connecting the outer collector of the EGU to the FCU.

In the second case (EGU in the upper portion of the battery) the positive contact is on the EGU and the negative contact is on the FCU. The electric connection is made at the inner region and the sealing is made at the outer region.

The sealing system may be based on traditional designs, like a thread, or more recent designs, like the snap closing of tubes.

The process of manufacturing a battery according to the invention is based on building the tubular assembly by outwardly expanding the inner collector, which produces a pressure on the other components of the battery that allows for a good sealing and a good electric contact.

The method starts by placing all the EGU components (MEAs, inter-cell connectors, seals) between the two collectors, for which a steel inner collecting tube, whose initial diameter is smaller than its final diameter, is used. Once all components have been placed, a piston is inserted through the inner portion of the inner collector, said piston having a diameter slightly larger than the diameter of said inner tube. The piston is inserted by means of an apparatus (like a press, etc) that can develop a force strong enough to radially and outwardly deform he inner tube, by pressing the previously described EGU components against the inner wall of the steel outer collecting tube. The inner tube is made of a material able to support the plastic deformation that it needs to expand, without breaking but continuing to apply the pressure once the piston has been extracted. On its part, the outer tube is made of a material rigid enough to support the pressure applied on it during and after the expansion process.

The applied pressure has a double function:
- On one hand it achieves a good electric contact between the EGU components (especially between the membrane and the catalyst, but also between the gas diffuser and the electric collector), thus reducing the internal resistance of the battery.
- On the other hand the closing seals between the two collectors are deformed. This deformation allows for the seals to perfectly adapt to the irregularities in the collector's steel, thus improving the sealing of the battery.

A convenient way to provide hydrogen is to store it in metallic hydrides. This system is based on the fact that, when hydrogen is put in contact with certain metallic compounds at a pressure of a few atmospheres, a chemical reaction takes place and produces the so called metallic hydrides. This process is reversible, so that if the pressure is reduced the gaseous hydrogen is released.

Alternatively, recent research points out that carbon nanofibers can store vast amounts of hydrogen in very small volumes and with a very low weight, so that these materials may be suitable for rechargeable FCUs (nanomaterials are expensive and it is preferred that they may not be disposable).

In a rechargeable FCU comprising metallic hydrides it is necessary for the material of the container supporting them to be resistant, since the metallic hydrides are stored at a pressure much higher than the atmospheric pressure.

The design of such a container must adapt to the employed EGU and to the consumer battery standards, so that said container may occupy the most part of the available volume that is not occupied by the EGU. In general this involves a good use of the inner cavity of the EGU.

The exit valve for the hydrogen is located in the end of the FCU that goes into the EGU, so that the possible leakage occurring during the transportation of gas from the FCU to the EGU is reduced. The exit valve for hydrogen from the FCU is, for example, a pressure valve, because it must be automatically opened without the intervention of the user. The opening of this valve should occur when the EGU and the FCU are joined and closed, so as to prevent gas leakage.

In the case of a rechargeable FCU, it should be provided with a second valve for refilling it. This allows for a great simplification of the first valve and improves the hermeticity of the battery, even during the refilling operation. If, on the contrary, the FCU is disposable, the exit for hydrogen can be provided by one valve o by means of a destructive method, since the FCU is not reusable: in this case a second refill valve is not required.

In the case of a disposable FCU, two variants for the storage of hydrogen are considered: physical storage and chemical storage.

For physical storage physical processes are used, like hydrogen absorption or adsorption (metallic hydrides, carbon nanofibers, etc).

Chemical storage is based on using a material containing much hydrogen in its composition, said material being able to release the hydrogen upon a chemical reaction. Examples of such a material: NaBH₄, NH₃-NH₃, LiAlH₄, etc.

Although only particular embodiments of the invention have been shown and described in the present specification, the skilled man will be able to introduce modifications and substitute any technical features thereof with others that are technically equivalent, depending on the particular requirements of each case, without departing from the scope of protection defined by the appended claims.

## Claims

1. Method of manufacturing a consumer battery, said battery comprising an electricity generating unit (100) and a fuel carrying unit (200), both of which form a passive tubular fuel cell, the electricity generating unit being provided with an outer tubular current collector (130), so that the fuel carrying unit supplies a gaseous fuel to the electricity generating unit, the oxidizer being the oxygen in the air, **characterized in that** the method comprises the steps of:
providing the electricity generating unit with an inner tubular current collector (140);
arranging the parts of the electricity generating unit (100) between the outer tubular current collector (130) and the inner tubular current collector (140);
expanding the inner tubular current collector (140), so that it applies an outward pressure on said parts arranged between both collectors.

2. Method according to claim 1, further comprising:
providing the electricity generating unit (100) with two adjacent electricity generating tubular cells (110; 120) connected in series.

3. Method according to claim 2, further comprising:
providing each tubular cell (110; 120) with at least one proton exchange membrane (115);
providing the at least one proton exchange membrane (115) with a catalyst and a gas diffuser on each side thereof.

4. Method according to claim 3, further comprising:
bending at least one of said proton exchange membranes (115) to adopt a cylindrical configuration starting from a flat shape.

5. Method according to claim 4, further comprising:
joining and sealing the ends of at least one tubular cell provided with a flat membrane bent into a cylinder to prevent gas leakage.

6. Method according to claim 3, further comprising:
making at least one of the proton exchange membranes with a tubular shape.

7. Method according to any of the claims 2 to 6, further comprising:
providing each tubular cell (110, 120) with at least two cylindrical seals (124, 126) for sealing the cell and preventing gas leakage arranging said seals on the outer side and on the inner side of the cell.

8. Method according to claim 7, further comprising:
forming the cylindrical seals during the manufacture of the cell;
starting said forming from a fluid material that solidifies sealing the cell and preventing gases from entering or exiting the cell.

9. Method according to claim 7, further comprising:
winding a sheet of a deformable material to form the cylindrical seals during the manufacture of the cell.

10. Method according to claim 7, further comprising:
pre-forming deformable pieces to form the cylindrical seals;
pressuring the cells so that said pre-deformable pieces provide the sealing of the cells.

11. Method according to any of claims 9 or 10, further comprising:
plastically deforming the seals.

12. Method according to any of claims 9 or 10, further comprising:
elastically deforming the seals.

13. Method according to any of the preceding claims, further comprising:
axially arranging two adjacent tubular cells (110; 120), so that they are consecutive.

14. Method according to claim 13, further comprising:
arranging an intermediate current collector (155) between the inner current collector (140) and the outer current collector (130);
shaping said intermediate collector as a tubular mesh with two diameters that define two demi-tubes;
placing a cell inside the demi-tube having the larger diameter and placing the adjacent cell surrounding the outside of the demi-tube having the smaller diameter.

15. Method according to any of claims 1 to 13, further comprising:
radially and concentrically arranging two adjacent tubular cells (110; 120).

16. Method according to claim 15, further comprising:
arranging the elements of said two concentrical tubular cells in the same order in the radial direction.

17. Method according to claim 16, further comprising:
arranging a bipolar ring between the two concentrical tubular cells for establishing an electric contact.

18. Method according to claim 17, further comprising:
shaping said bipolar ring as a spiral corrugated tube (158);
defining some channels for the circulation of oxygen between the two concentrical tubular cells.

19. Method according to claim 15, further comprising:
arranging the elements of said two concentrical tubular cells in the inverse order in the radial direction.

20. Method according to any of the preceding claims, further comprising:
configuring the fuel carrying unit in such a way that, when in operation, the fuel carrying unit (200) can be pushed by a spring towards the inside of the electricity generating unit (100), this action causing an exit valve for the gaseous fuel to be opened to the electricity generating unit.

## Patentansprüche

1. Verfahren zur Herstellung einer Verbraucherbatterie, wobei die besagte Batterie eine Strom erzeugende Einheit (100) und eine Brennstoff enthaltende Einheit (200) besitzt, die zusammen eine passive rohrförmige Brennstoffzelle bilden, wobei die Strom erzeugende Einheit mit einem äußeren rohrförmigen Stromabnehmer (130) versehen ist, so dass die Brennstoff enthaltende Einheit die Strom erzeugende Einheit mit einen gasförmigen Brennstoff versorgt, wobei das Oxidationsmittel Luftsauerstoff ist, **dadurch gekennzeichnet, dass** das Verfahren die folgenden Schritte umfasst:
Ausstatten der Strom erzeugenden Einheit mit einem inneren rohrförmigen Stromabnehmer (140);
Anordnen der Teile der Strom erzeugenden Einheit (100) zwischen dem äußeren rohrförmigen Stromabnehmer (130) und dem inneren rohrförmigen Stromabnehmer (140);
Spreizen des inneren rohrförmigen Stromabnehmers (140), so dass er auf die besagten zwischen den beiden Stromabnehmern angeordneten Teile einen nach außen gerichteten Druck ausübt.

2. Verfahren nach Anspruch 1 mit folgendem weiteren Verfahrensschritt:
Ausstatten der Strom erzeugenden Einheit (100) mit zwei aneinander angrenzenden Strom erzeugenden rohrförmigen Zellen (110; 120), die in Serie geschaltet sind.

3. Verfahren nach Anspruch 2 mit folgenden weiteren Verfahrensschritten:
Ausstatten jeder rohrförmigen Zelle (110; 120) mit mindestens einer Protonen-Austausch-Membran (115);
Ausstatten mindestens einer Protonen-Austausch-Membran (115) mit einem Katalysator und einem Gasdiffusor auf jeder Seite derselben.

4. Verfahren nach Anspruch 3 mit folgendem weiteren Verfahrensschritt:
Biegen mindestens einer der besagten Protonen-Austausch-Membranen (115), so dass dieselbe von einer flachen Form ausgehend eine zylindrische Gestalt annimmt.

5. Verfahren nach Anspruch 4 mit folgendem weiteren Verfahrensschritt:
Zusammenfügen und Versiegeln der Enden mindestens einer rohrförmigen Zelle, die mit einer flachen zu einem Zylinder gebogenen Membran versehen ist, zur Vermeidung von Gasverlusten.

6. Verfahren nach Anspruch 3 mit folgendem weiteren Verfahrensschritt:
Fertigung mindestens einer der Protonen-Austausch-Membranen in Rohrform.

7. Verfahren nach einem der Ansprüche 2 bis 6 mit folgenden weiteren Verfahrensschritten:
Ausstatten jeder rohrförmigen Zelle (110, 120) mit mindestens zwei zylindrischen Dichtungen (124, 126) zum Abdichten der Zelle und zur Vermeidung von Gasverlusten;
Anordnen der besagten Dichtungen auf der Außen- und Innenseite der Zelle.

8. Verfahren nach Anspruch 7 mit folgenden weiteren Verfahrensschritten:
Formen der zylindrischen Dichtungen während der Fertigung der Zelle;
Beginnen des besagten Formprozesses ausgehend von einem flüssigen Material, das fest wird und so die Zelle abdichtet und Gase daran hindert, in die Zelle einzudringen oder aus ihr auszutreten.

9. Verfahren nach Anspruch 7 mit folgendem weiteren Verfahrensschritt:
Rollen einer Platte aus verformbarem Material, so dass diese während der Fertigung der Zelle zu den zylindrischen Dichtungen wird.

10. Verfahren nach Anspruch 7 mit folgenden weiteren Verfahrensschritten:
Vorformen verformbarer Teile, die die zylindrischen Dichtungen bilden werden;
Ausüben eines Druckes auf die Zellen, so dass die besagten vorgeformten verformbaren Teile das Abdichten der Zellen bewirken.

11. Verfahren nach einem der Ansprüche 9 oder 10 mit folgendem weiteren Verfahrensschritt:
Plastisches Verformen der Dichtungen.

12. Verfahren nach einem der Ansprüche 9 oder 10 mit folgendem weiteren Verfahrensschritt:
Elastisches Verformen der Dichtungen.

13. Verfahren nach einem der vorstehenden Ansprüche mit folgendem weiteren Verfahrensschritt:
Axiales Anordnen von zwei aneinander grenzenden rohrförmigen Zellen (110; 120), so dass eine auf die andere folgt.

14. Verfahren nach Anspruch 13 mit folgenden weiteren Verfahrensschritten:
Anordnen eines zwischengeschalteten Stromabnehmers (155) zwischen dem inneren Stromabnehmer (140) und dem äußeren Stromabnehmer (130);
Gestalten des besagten zwischengeschalteten Stromabnehmers als ein rohrförmiges Gitter mit zwei Durchmessern, die zwei Halbrohre definieren:
Anordnen einer Zelle im Innern des Halbrohres mit dem größeren Durchmesser und Anordnen der angrenzenden Zelle um die Außenseite des Halbrohrs mit dem geringeren Durchmesser herum.

15. Verfahren nach einem der Ansprüche 1 bis 13 mit folgendem weiteren Verfahrensschritt:
Radiales und konzentrisches Anordnen von zwei aneinander grenzenden rohrförmigen Zellen (110; 120).

16. Verfahren nach Anspruch 15 mit folgendem weiteren Verfahrensschritt:
Anordnen der Bauteile der zwei besagten konzentrischen rohrförmigen Zellen in radialer Richtung in der selben Reihenfolge.

17. Verfahren nach Anspruch 16 mit folgendem weiteren Verfahrensschritt:
Anordnen eines bipolaren Rings zwischen den beiden konzentrischen rohrförmigen Zellen zur Herstellung eines elektrischen Kontaktes.

18. Verfahren nach Anspruch 17 mit folgenden weiteren Verfahrensschritten:
Gestalten des besagten bipolaren Rings als schraubenförmiges gewelltes Rohr (158);
Anbringen einiger Kanäle für den Sauerstoffaustausch zwischen den beiden konzentrischen rohrförmigen Zellen.

19. Verfahren nach Anspruch 15 mit folgendem weiteren Verfahrensschritt:
Anordnen der Bauteile der zwei besagten konzentrischen rohrförmigen Zellen in radialer Richtung in umgekehrter Reihenfolge.

20. Verfahren nach einem der vorstehenden Ansprüche mit folgendem weiteren Verfahrensschritt:
derartige Gestaltung der Brennstoff enthaltenden Einheit, dass die Brennstoff enthaltende Einheit (200) während des Betriebs durch eine Feder zur Innenseite der Strom erzeugenden Einheit (100) hin gedrückt wird, wobei diese Aktion das Öffnen eines Auslassventils für den gasförmigen Brennstoff zur Strom erzeugenden Einheit bewirkt.

## Revendications

1. Procédé de fabrication d'une batterie pour un consommateur, ladite batterie comprenant une unité génératrice d'électricité (100) et une unité portant du carburant (200), dont l'une et l'autre forment une pile à combustible tubulaire passive, l'unité génératrice d'électricité étant pourvue d'un collecteur de courant tubulaire externe (130), de sorte que l'unité portant du carburant fournit un carburant gazeux à l'unité génératrice d'électricité, l'oxydant étant l'oxygène dans l'air, **caractérisé en ce que** le procédé comprend les étapes consistant à :
fournir à l'unité génératrice d'électricité un collecteur de courant tubulaire interne (140) ;
disposer les parties de l'unité génératrice d'électricité (100) entre le collecteur de courant tubulaire externe (130) et le collecteur de courant tubulaire interne (140) ;
étendre le collecteur de courant tubulaire interne (140), afin qu'il applique une pression vers l'extérieur sur lesdites parties disposées entre l'un et l'autre collecteurs.

2. Procédé selon la revendication 1, comprenant en outre :
la fourniture à l'unité génératrice d'électricité (100) de deux cellules tubulaires de production d'électricité adjacentes (110 ; 120) reliées en série.

3. Procédé selon la revendication 2, comprenant en outre :
la fourniture à chaque cellule tubulaire (110 ; 120) d'au moins une membrane d'échange de protons (115) ;
en fournissant à l'au moins une membrane d'échange de protons (115) un catalyseur et un diffuseur de gaz sur chaque côté de celle-ci.

4. Procédé selon la revendication 3, comprenant en outre :
le pliage d'au moins une desdites membranes d'échange de protons (115) de façon à adopter une configuration cylindrique en partant d'une forme plate.

5. Procédé selon la revendication 4, comprenant en outre :
le raccordement et le scellage des extrémités d'au moins une cellule tubulaire pourvue d'une membrane plate pliée en un cylindre pour empêcher une fuite de gaz.

6. Procédé selon la revendication 3, comprenant en outre :
la réalisation d'au moins une des membranes d'échange de protons avec une forme tubulaire.

7. Procédé selon l'une quelconque des revendications 2 à 6, comprenant en outre :
la fourniture à chaque cellule tubulaire (110, 120) d'au moins deux joints cylindriques (124, 126) pour sceller la cellule et empêcher une fuite de gaz ;
la disposition desdits joints sur le côté externe et sur le côté interne de la cellule.

8. Procédé selon la revendication 7, comprenant en outre :
la formation des joints cylindriques durant la fabrication de la cellule ; en commençant ladite formation à partir d'un matériau fluide qui se solidifie en scellant la cellule et en empêchant les gaz de pénétrer ou de sortir de la cellule.

9. Procédé selon la revendication 7, comprenant en outre :
l'enroulement d'une feuille d'un matériau déformable pour former les joints cylindriques durant la fabrication de la cellule.

10. Procédé selon la revendication 7, comprenant en outre :
un préformage des pièces déformables pour former les joints cylindriques ; une mise sous pression des cellules de sorte que lesdites pièces pré-déformables fournissent le scellage des cellules.

11. Procédé selon l'une quelconque des revendications 9 ou 10, comprenant en outre :
une déformation plastique des joints.

12. Procédé selon l'une quelconque des revendications 9 ou 10, comprenant en outre :
une déformation élastique des joints.

13. Procédé selon l'une quelconque des revendications précédentes, comprenant en outre :
la disposition axiale de deux cellules tubulaires adjacentes (110 ; 120), afin qu'elles soient consécutives.

14. Procédé selon la revendication 13, comprenant en outre :
la disposition d'un collecteur de courant intermédiaire (155) entre le collecteur de courant interne (140) et le collecteur de courant externe (130) ;
la mise en forme dudit collecteur intermédiaire en tant que treillis tubulaire avec deux diamètres qui définissent deux demi-tubes ;
la mise en place d'une cellule à l'intérieur du demi-tube ayant le diamètre plus grand et la mise en place de la cellule adjacente entourant l'extérieur du demi-tube ayant le diamètre plus petit.

15. Procédé selon l'une quelconque des revendications 1 à 13, comprenant en outre :
la disposition radiale et concentrique de deux cellules tubulaires adjacentes (110 ; 120).

16. Procédé selon la revendication 15, comprenant en outre :
la disposition des éléments desdites deux cellules tubulaires concentriques dans le même ordre dans la direction radiale.

17. Procédé selon la revendication 16, comprenant en outre :
la disposition d'un anneau bipolaire entre les deux cellules tubulaires concentriques pour établir un contact électrique.

18. Procédé selon la revendication 17, comprenant en outre :
la mise en forme dudit anneau bipolaire sous forme de tube cannelé en spirale (158) ;
la définition de quelques canaux pour la circulation d'oxygène entre les deux cellules tubulaires concentriques.

19. Procédé selon la revendication 15, comprenant en outre :
la disposition des éléments desdites deux cellules tubulaires concentriques dans l'ordre inverse dans la direction radiale.

20. Procédé selon l'une quelconque des revendications précédentes, comprenant en outre :
une configuration de l'unité portant du carburant d'une manière telle que, lorsqu'elle est fonctionnement, l'unité portant du carburant (200) peut être poussée par un ressort en direction de l'intérieur de l'unité génératrice d'électricité (100), cette action provoquant l'ouverture d'une soupape de sortie pour le carburant gazeux vers l'unité génératrice d'électricité.
